# EUROPEAN PATENT APPLICATION

(11) **EP 4 273 951 A1**
(43) Date of publication of application: **08.11.2023**
(21) Application number: 21914968.9
(22) Date of filing: 15.10.2021
(51) Int. Cl.: H01M 4/13, H01M 4/139

(54) **NEGATIVE ELECTRODE FOR NON-AQUEOUS ELECTROLYTE SECONDARY BATTERIES, METHOD FOR MANUFACTURING SAME, AND METHOD FOR INSPECTING SAME, AND NON-AQUEOUS ELECTROLYTE SECONDARY BATTERY AND METHOD FOR MANUFACTURING SAME**

(30) Priority: 29.12.2020 JP 2020219744
(71) Applicant: Maxell, Ltd., Kyoto 618-8525 (JP)
(72) Inventor: TAKAICHI, Yuta, Otokuni-gun, Kyoto 618-8525 (JP)
(74) Representative: Diehl & Partner
(86) International application number: PCT/JP2021/038237
(87) International publication number: WO 2022/145107

(57) **Abstract**

Provided are: a non-aqueous electrolyte secondary battery having excellent charging load characteristics; a method for manufacturing the same; a negative electrode that can constitute the non-aqueous electrolyte secondary battery; a method for manufacturing the same; and a method for inspecting a negative electrode to manufacture a non-aqueous electrolyte secondary battery. The present invention relates to Goals 7 and 12 of the SDGs. The negative electrode for a non-aqueous electrolyte secondary battery of the present invention includes a negative-electrode mixture layer containing a negative-electrode active material on one surface or both surfaces of a current collector, and (1) Rs/(ρv×*d*) falls within a specific range in accordance with the thickness of the negative-electrode mixture layer, or (2) the negative electrode satisfies a relationship: Rs ≤ 1.67*d* + *b,* where Rs is an interface resistance (Ωcm²) between the negative-electrode mixture layer and the current collector, pv is a volume resistivity (Ωcm) of the negative-electrode mixture layer, and *d* is the thickness (cm) of the negative-electrode mixture layer. The non-aqueous electrolyte secondary battery of the present invention includes a positive electrode, a negative electrode, a separator interposed between the positive electrode and the negative electrode, and a non-aqueous electrolyte, and the negative electrode is the negative electrode for a non-aqueous electrolyte secondary battery of the present invention.

## Description

### Technical Field

The present invention relates to a non-aqueous electrolyte secondary battery that has excellent charging load characteristics, a method for manufacturing the non-aqueous electrolyte secondary battery, a negative electrode that can constitute the non-aqueous electrolyte secondary battery, a method for manufacturing the negative electrode, and a method for inspecting a negative electrode to manufacture a non-aqueous electrolyte secondary battery.

### Background Art

Non-aqueous electrolyte secondary batteries are used as power sources of portable electronic devices such as mobile phones and notebook personal computers, electric vehicles, and the like, and can contribute to achieving, among sustainable development goals (SDGs) adopted by the United Nations, Goal 7 (affordable and clean energy) and Goal 12 (responsible consumption and production). Also, efforts for improving various characteristics of non-aqueous electrolyte secondary batteries are being made along with the diversification of their applications.

An improvement desired for non-aqueous electrolyte secondary batteries is a reduction in charging time. Anon-aqueous electrolyte secondary battery is commonly charged using a method of charging the battery with a constant current until the battery voltage reaches a predetermined value (constant current charging (CC charging)), and thereafter charging the battery at a constant voltage until the current value decreases to a predetermined value (constant voltage charging (CV charging)), and the time it takes for the battery voltage to reach the end voltage from the start of CC charging is shorter than the time it takes for the current value to reach the ending condition from the start of CV charging. Accordingly, it is desirable that the battery can be charged with a large amount of electricity through the CC charging, from the standpoint of reducing the charging time.

Therefore, in order to reduce the charging time of a non-aqueous electrolyte secondary battery, it is necessary to obtain a large capacity when the CC charging is performed at a large current value, or in other words, it is necessary to improve charging load characteristics. In order to improve the charging load characteristics of a non-aqueous electrolyte secondary battery, it is effective to reduce the resistance value of an electrode, for example.

Patent Document 1 proposes setting an interface resistance between an electrode active material layer and a current collector layer so as to fall within a specific range in an electrode for a lithium ion battery that includes the electrode active material layer containing an electrode active material, a conductive aid, and the like on at least one surface of the current collector layer, although this technique is not for improving charging load characteristics of a battery.

### Prior Art Documents

### Patent Document

Patent Document 1: WO 2018/016528

### Disclosure of Invention

### Problem to be Solved by the Invention

The present invention was made in view of the above circumstances, and has an object of providing a non-aqueous electrolyte secondary battery that has excellent charging load characteristics, a method for manufacturing the non-aqueous electrolyte secondary battery, a negative electrode that can constitute the non-aqueous electrolyte secondary battery, a method for manufacturing the negative electrode, and a method for inspecting a negative electrode to manufacture a non-aqueous electrolyte secondary battery.

### Means for Solving Problem

A negative electrode for a non-aqueous electrolyte secondary battery according to a first aspect of the present invention includes a negative-electrode mixture layer containing a negative-electrode active material on one surface or both surfaces of a current collector, and Rs/(ρv×*d*) is a value described below, where Rs is an interface resistance (Ωcm²) between the negative-electrode mixture layer and the current collector, pv is a volume resistivity (Ωcm) of the negative-electrode mixture layer, and *d* is a thickness (cm) of the negative-electrode mixture layer (thickness of the negative-electrode mixture layer on one surface of the current collector, this applies to the expression "thickness of the negative-electrode mixture layer" in the following description of the present specification).

(A) When the thickness of the negative-electrode mixture layer is 35 µm or more and less than 50 µm, Rs/(ρv×*d*) is 5 to 20. (B) When the thickness of the negative-electrode mixture layer is 50 µm or more and 100 µm or less, Rs/(ρv×*d*) is 10 to 38.5.

A negative electrode for a non-aqueous electrolyte secondary battery according to a second aspect of the present invention includes a negative-electrode mixture layer containing a negative-electrode active material on one surface or both surfaces of a current collector, and satisfies a relationship: Rs ≤ 1.67*d* + *b*, where Rs is an interface resistance (Ωcm²) between the negative-electrode mixture layer and the current collector, *d* is a thickness (cm) of the negative-electrode mixture layer, and *b* is -0.01 or more and 0 or less.

A non-aqueous electrolyte secondary battery according to the present invention includes a positive electrode, a negative electrode, a separator interposed between the positive electrode and the negative electrode, and a non-aqueous electrolyte, wherein the negative electrode is the negative electrode for a non-aqueous electrolyte secondary battery (the negative electrode according to the first aspect or the second aspect) of the present invention.

A method for manufacturing the negative electrode for a non-aqueous electrolyte secondary battery according to the first aspect of the present invention includes, when forming the negative-electrode mixture layer containing the negative-electrode active material on one surface or both surfaces of the current collector, adjusting the thickness of the negative-electrode mixture layer and Rs/(ρv×*d*) to values described above in (A) or (B).

A method for manufacturing the negative electrode for a non-aqueous electrolyte secondary battery according to the second aspect of the present invention includes, when forming the negative-electrode mixture layer containing the negative-electrode active material on one surface or both surfaces of the current collector, adjusting the interface resistance Rs and the thickness *d* so as to satisfy the relationship: Rs ≤ 1.67*d* + *b* (where *b* is -0.01 or more and 0 or less).

In a method for manufacturing a non-aqueous electrolyte secondary battery including a positive electrode, a negative electrode, a separator interposed between the positive electrode and the negative electrode, and a non-aqueous electrolyte according to the present invention, a negative electrode for a non-aqueous electrolyte secondary battery manufactured using a method for manufacturing a negative electrode for a non-aqueous electrolyte secondary battery according to the present invention is used as the negative electrode.

Also, the present invention includes a method for inspecting a negative electrode for a non-aqueous electrolyte secondary battery including a negative-electrode mixture layer containing a negative-electrode active material on one surface or both surfaces of a current collector, the method including: a step of measuring an interface resistance Rs (Ωcm²) between the negative-electrode mixture layer and the current collector, a volume resistivity ρv (Ωcm) of the negative-electrode mixture layer, and a thickness *d* (cm) of the negative-electrode mixture layer, and calculating a value of Rs/(ρv×*d*) with respect to the negative electrode for a non-aqueous electrolyte secondary battery; and a step of selecting a non-aqueous electrolyte secondary battery to which the negative electrode for a non-aqueous electrolyte secondary battery is to be applied, based on the value of Rs/(ρv×*d*).

Additionally, the present invention includes a method for inspecting a negative electrode for a non-aqueous electrolyte secondary battery including a negative-electrode mixture layer containing a negative-electrode active material on one surface or both surfaces of a current collector, the method including: a step of measuring an interface resistance Rs (Ωcm²) between the negative-electrode mixture layer and the current collector and a thickness *d* (cm) of the negative-electrode mixture layer, with respect to the negative electrode for a non-aqueous electrolyte secondary battery; and a step of selecting a non-aqueous electrolyte secondary battery to which the negative electrode for a non-aqueous electrolyte secondary battery is to be applied, based on a relationship between the interface resistance Rs and the thickness *d.*

### Effects of the Invention

According to the present invention, it is possible to provide a non-aqueous electrolyte secondary battery that has excellent charging load characteristics, a method for manufacturing the non-aqueous electrolyte secondary battery, a negative electrode that can constitute the non-aqueous electrolyte secondary battery, a method for manufacturing the negative electrode, and a method for inspecting a negative electrode to manufacture a non-aqueous electrolyte secondary battery.

### Brief Description of Drawings

[FIG. 1] FIG. 1 is a schematic plan view showing an example of a non-aqueous electrolyte secondary battery according to the present invention.
[FIG. 2] FIG. 2 is a cross-sectional view taken along the line I-I shown in FIG. 1.

### Description of the Invention

### <Negative Electrode for Non-Aqueous Electrolyte Secondary Battery (hereinafter may be simply referred to as a "negative electrode")>

### (Negative Electrode According to First Embodiment)

A negative electrode for a non-aqueous electrolyte secondary battery according to a first embodiment of the present invention includes a negative-electrode mixture layer that contains a negative-electrode active material on one surface or both surfaces of a current collector, and a ratio "Rs/(ρv×*d*)" between an interface resistance: Rs between the negative-electrode mixture layer and the current collector and a product: ρv×*d* of a volume resistivity (pv) of the negative-electrode mixture layer and a thickness (*d*) of the negative-electrode mixture layer falls within a specific range in accordance with the thickness of the negative-electrode mixture layer as described below. In this case, charging load characteristics of a non-aqueous electrolyte secondary battery (a non-aqueous electrolyte secondary battery according to the present invention) in which the negative electrode is used can be improved presumably because the negative electrode has a small resistance value.
(A) When the thickness of the negative-electrode mixture layer is 35 µm or more and less than 50 µm, Rs/(ρv×*d*) is 5 or more and 20 or less (preferably 15 or less, and more preferably 10 or less).
(B) When the thickness of the negative-electrode mixture layer is 50 µm or more and 100 µm or less, Rs/(ρv×*d*) is 10 or more and 38.5 or less (preferably 30 or less, and more preferably 20 or less).

Although the reason why the charging load characteristics of the non-aqueous electrolyte secondary battery can be improved by adjusting the negative electrode as described above in (A) or (B) is not clear, the reason is presumed as follows. It is thought that in an electrode in which the interface resistance between a current collector and a mixture layer is very large compared with the resistance of the mixture layer (i.e., Rs/(ρv×*d*) is very large compared with 1) or the interface resistance is very small compared with the resistance of the mixture layer (i.e., Rs/(ρv×*d*) is very small compared with 1), a negative-electrode active material (for example, a carbon material) having higher conductivity and a conductive aid used as necessary, which are contained in the mixture layer of the electrode, are not efficiently functioning as components for securing conductivity in the negative-electrode mixture layer. On the other hand, it is thought that in an electrode in which the relationship between the interface resistance between a current collector and a mixture layer and the resistance of the mixture layer is within a certain range (for example, Rs/(ρv×*d*) is relatively close to 1), a negative-electrode active material having higher conductivity and a conductive aid used as necessary, which are contained in the mixture layer of the electrode, are more efficiently functioning as components for securing conductivity in the negative-electrode mixture layer, and electrons are more efficiently conducted to the current collector. It is presumed that, accordingly, the charging load characteristics of the non-aqueous electrolyte secondary battery can be improved by adjusting the value of Rs/(ρv×*d*) of the negative electrode so as to fall within a specific range.

Essentially, the closer the value of Rs/(ρv×*d*) is to 1.0, the better, but it is very difficult to adjust the value of Rs/(ρv×*d*) to approximately 1.0 in an actual negative electrode, and it was found that the charging load characteristics of the non-aqueous electrolyte secondary battery can be improved by adjusting the value of Rs/(ρv×*d*) so as to be close to 1.0 as far as possible, when compared with a case where the value of Rs/(ρv×*d*) is very far from 1.0.

In the case (A) described above, the thickness of the negative-electrode mixture layer is set to 35 µm or more because, if the negative-electrode mixture layer is as thin as less than 35 µm, the battery tends to have a high degree of charging load characteristics irrespective of the value of Rs/(ρv×*d*).

In the case (B) described above, the thickness of the negative-electrode mixture layer is set to 100 µm or less because, if the thickness of the negative-electrode mixture layer exceeds 100 µm, it is difficult to adjust the value of Rs/(ρv×*d*) in such a manner that the battery can have very good charging load characteristics. Also, the negative electrode according to the present invention is preferably manufactured by applying a negative-electrode mixture containing composition obtained by dispersing the negative-electrode active material and the like in a solvent, to the current collector as described later, and it is not easy to form the negative-electrode mixture layer with a thickness larger than 100 um while adjusting the value of Rs/(ρv×*d*) by using this manufacturing method.

In the case (A) described above, Rs is actually 0.002 Ωcm² or more, and the manufacture is more facilitated when Rs is 0.0025 Ωcm² or more. In the case (A), Rs is preferably 0.01 Ωcm² or less, more preferably 0.005 Ωcm² or less, and further preferably 0.003 Ωcm² or less. In the case (A), pv is preferably 0.02 Ωcm or more, more preferably 0.03 Ωcm or more, and further preferably 0.04 Ωcm or more. Also, pv is preferably 0.5 Ωcm or less, more preferably 0.2 Ωcm or less, and further preferably 0.1 Ωcm or less.

In the case (B) described above, Rs is actually 0.002 Ωcm² or more, and the manufacture is more facilitated when Rs is 0.003 Ωcm² or more. In the case (B), Rs is preferably 0.02 Ωcm² or less, and more preferably 0.013 Ωcm² or less. In the case (B), pv is preferably 0.01 Ωcm or more, and more preferably 0.02 Ωcm or more. Also, pv is preferably 0.4 Ωcm or less, more preferably 0.1 Ωcm or less, and particularly preferably 0.07 Ωcm or less.

### (Negative Electrode According to Second Embodiment)

A negative electrode for a non-aqueous electrolyte secondary battery according to a second embodiment of the present invention includes a negative-electrode mixture layer that contains a negative-electrode active material on one surface or both surfaces of a current collector, and an interface resistance Rs (Ωcm²) between the negative-electrode mixture layer and the current collector and a thickness *d* (cm) of the negative-electrode mixture layer satisfy a relationship: Rs ≤ 1.67*d* + *b* (where *b is* -0.01 or more and 0 or less, preferably -0.003 or less, and more preferably -0.005 or less). In the case where Rs and *d* satisfy the above relationship, the interface between the current collector and the negative-electrode mixture layer has a small resistance value, and it is presumed that, therefore, charging load characteristics of a non-aqueous electrolyte secondary battery (a non-aqueous electrolyte secondary battery according to the present invention) in which the negative electrode is used can be improved in this case as well, although the reason for this is not clear.

In the negative electrode satisfying the relationship: Rs ≤ 1.67*d*+ *b,* Rs is preferably 0.002 Ωcm² or more, and *d* is preferably 0.01 cm (100 µm) or less. When Rs and *d* in the negative electrode satisfying the relationship: Rs ≤ 1.67*d* + *b* fall within the above ranges, the effect of improving the charging load characteristics of the non-aqueous electrolyte secondary battery is improved.

In the negative electrode according to the second embodiment, *d* is usually 0.0035 cm (35 µm) or more. From the standpoint of improving a discharging capacity, *d* is preferably 0.005 cm (50 µm) or more, and more preferably 0.006 cm (60 µm) or more. On the other hand, if the thickness *d* is too large, the manufacture becomes difficult and therefore, *d* is usually 0.01 cm (100 µm) or less, preferably 95 µm or less, and further preferably 80 µm or less.

In the negative electrode according to the second embodiment, Rs is actually 0.002 Ωcm² or more, and the manufacture is more facilitated when Rs is 0.003 Ωcm² or more.

From the standpoint of obtaining more favorable charging load characteristics of the non-aqueous electrolyte secondary battery, Rs and *d* in the negative electrode according to the second embodiment more preferably satisfy a relationship: Rs ≤ 1.67*d*-0.003.

Additionally, from the standpoint of obtaining yet more favorable charging load characteristics of the non-aqueous electrolyte secondary battery, Rs and *d* in the negative electrode according to the second embodiment particularly preferably satisfy a relationship: Rs ≤ 1.67*d*-0.005.

### (Matter Common to Negative Electrode According to First Embodiment and Negative Electrode According to Second Embodiment)

In both the first and second embodiments, the negative electrode according to the present invention includes the negative-electrode mixture layer containing the negative-electrode active material on one surface or both surfaces of the current collector.

As the negative-electrode active material, it is possible to use a conventionally known negative-electrode active material used in the negative electrode of a non-aqueous electrolyte secondary battery, or in other words, an active material that can absorb and desorb Li ions. Specific examples of such a negative-electrode active material include particles of carbon materials such as graphite (natural graphite; artificial graphite obtained by graphitizing easily-graphitizable carbon such as pyrolytic carbon, MCMB, or carbon fiber at 2800°C or higher, etc.), pyrolytic carbon, coke, glassy carbon, a sintered body of an organic polymer compound, mesophase carbon microbeads, carbon fiber, activated carbon, soft carbon, and hard carbon; metals (Si, Sn, etc.) that can form an alloy with lithium, and materials (alloy, oxide, etc.) that contain these metals; and the like. These negative-electrode active materials may be used alone or in a combination of two or more in the negative electrode.

The negative-electrode mixture layer usually contains a binder. Examples of the binder contained in the negative-electrode mixture layer include polyvinylidene fluoride (PVDF), polytetrafluoroethylene, polyacrylic acid, chitosan, styrene butadiene rubber (SBR), and carboxymethyl cellulose (CMC).

The negative-electrode mixture layer may also contain a conductive aid. Examples of the conductive aid that can be used in the negative-electrode mixture layer include: graphite; amorphous carbon materials such as carbon black (acetylene black, Ketjen black, etc.) and carbon materials including amorphous carbon generated on their surfaces; filamentous carbon (vapor-grown carbon fiber, carbon fiber obtained by spinning and then carbonizing pitch, etc.); and carbon nanotubes (various types of multilayer or single-layer carbon nanotubes). These may be used alone or in a combination of two or more.

As the current collector in the negative electrode, it is possible to use a foil, a punched metal, a mesh, an expanded metal, or the like made of copper, a copper alloy, nickel, or a nickel alloy, and a copper foil is usually used. The thickness of the negative electrode current collector is preferably 5 to 30 µm, for example.

The thickness of the negative-electrode mixture layer referred to in the present specification means an average value (number average value) of thicknesses measured at 10 arbitrarily selected points in a cross section of the negative electrode using an SEM scale in a field of view in which the cross section is magnified at 1000× magnification using a scanning electron microscope (SEM).

Note that the thickness of the negative-electrode mixture layer means the thickness of the negative-electrode mixture layer on one surface of the current collector as described above. In the case where the negative electrode includes an undercoat layer, which will be described later, the thickness of the negative-electrode mixture layer means the sum of the thickness of the undercoat layer formed on the current collector and the thickness of the negative-electrode mixture layer formed on the undercoat layer.

Also, Rs and pv of the negative electrode referred to in the present specification mean values determined using the following method. The thickness of the negative-electrode mixture layer is determined using the above-described method, and the thickness of the current collector is also determined using the same method. Then, the thickness (µm) and resistivity (Ωcm) of the current collector in the negative electrode and the thickness (µm) of the negative-electrode mixture layer are input to an electrode resistance measurement system "RM2610 (product name)" manufactured by Hioki E.E. Corporation, thereafter the negative electrode, which is the measurement sample, is set in the system, and measurement is started by lowering a probe. Thus, the interface resistance: Rs (Ωcm²) between the negative-electrode mixture layer and the current collector and the volume resistivity: ρv (Ωcm) of the negative-electrode mixture layer are determined. In the measurement, a measurement speed is set to Normal, a voltage range is set to 0.5 V, and a maximum current value with which a voltage V1 calculated by software of the system becomes 0.1 V or less is selected from 50 mA, 10 mA, 1 mA, 100 µA, and 10 µA.

Note that a known resistivity determined by the composition of the negative-electrode current collector that is used is used as the resistivity (Ωcm) of the current collector to be input to the system. Also, element analysis is performed with respect to the current collector obtained from a portion of the negative electrode taken out from the battery to identify the composition, and a known resistivity is used. Each measurement described above is carried out after taking out the negative electrode from an exterior body of the non-aqueous electrolyte secondary battery in a discharged state, and thereafter washing the negative electrode with diethyl carbonate a plurality of times.

Also, Rs/(ρv×*d*) of the negative electrode referred to in the present specification means a value obtained by measuring Rs and pv at 15 arbitrarily selected points on a single measurement sample using the above-described method, calculating Rs/(ρv×*d*) for each point, excluding, from the calculated values of Rs/(ρv×*d*), five values from the largest value and five values from the smallest value, and calculating an average value (number average value) of the remaining five values.

Furthermore, Rs of the negative electrode according to the second embodiment means a value obtained by measuring Rs at 15 arbitrarily selected points on a single measurement sample using the above-described method, excluding, from the measured values, five values from the largest value and five values from the smallest value, and calculating an average value (number average value) of the remaining five values.

The negative electrode can be obtained by preparing a negative-electrode mixture containing composition, which is a slurry or a paste, by dispersing a negative-electrode mixture that contains the negative-electrode active material and further contains a binder, a conductive aid, or the like used as necessary, in water or an organic solvent such as N-methyl-2-pyrrolidone (NMP) (the binder may be dissolved in the solvent), applying the prepared composition to one surface or both surfaces of the current collector, drying the applied composition, and performing press processing such as calender processing as necessary, for example.

Note that the value of Rs/(ρv×*d*) is adjusted to a value in accordance with the thickness of the negative-electrode mixture layer in the negative electrode according to the first embodiment, and Rs and *d* are adjusted so as to satisfy the relationship described above in the negative electrode according to the second embodiment, while the negative electrodes are manufactured as described above.

When the negative-electrode mixture containing composition is rapidly dried after applied to the current collector, components having higher conductivity, such as the negative-electrode active material having higher conductivity and the conductive aid in the applied film of the negative-electrode mixture containing composition usually move, and the proportion of the content of the components having higher conductivity tends to be higher at the surface of the formed negative-electrode mixture layer (surface on the side opposite to the current collector) than in the other portion of the negative-electrode mixture layer, and the value of Rs tends to be large due to this phenomenon, and consequently the value of Rs/(ρv×*d*) also tends to be away from 1.0 and very large. This phenomenon is noticeable particularly when the negative-electrode mixture layer is thick. Therefore, by reducing, when drying the applied film of the negative-electrode mixture containing composition, the variation in the concentration of the components having higher conductivity in the negative-electrode mixture layer as far as possible, which is generated by the movement of the components having higher conductivity in the applied film of the negative-electrode mixture containing composition, it is possible to reduce the value of Rs and adjust Rs and *d* so as to satisfy the above-described relationship, and adjust the value of Rs/(ρv×*d*) so as to fall within the above-described ranges in accordance with the thickness of the negative-electrode mixture layer.

Specifically, it is conceivable to use: a method of drying the applied film of the negative-electrode mixture containing composition at a constant temperature; a method of slowly drying the applied film by using a plurality of drying furnaces and gradually increasing the temperatures of the drying furnaces; a method of delaying drying of the surface portion by filling a drying furnace with a volatilized solvent; a method of delaying drying of the surface as far as possible by keeping the electrode from being exposed to blowing air to keep the temperature of the electrode uniform; a method of delaying drying of the surface as far as possible by blowing air from the side opposite to the surface on which the composition has been applied; a method of drying the applied film with radiant heat using electromagnetic waves such as infrared rays including far infrared rays and near infrared rays; or a method of directly applying heat from the side (foil side) on which the composition has not been applied by using a guide roller or a metal plate like a hotplate, for example. In particular, if a roll-to-roll method is adopted, it is easy to change the time it takes to dry the applied film by changing the length of a drying furnace (length of a path within the drying furnace) and an application speed. Also, the method of slowly drying the applied film by using a plurality of drying furnaces and gradually increasing the temperatures of the drying furnaces is effective to easily control the variation in the concentration of the components having higher conductivity in the negative-electrode mixture layer.

Also, it is preferable to increase the viscosity of the negative-electrode mixture containing composition, and with this method as well, the variation in the concentration of the components having higher conductivity in the negative-electrode mixture layer can be reduced to reduce the value of Rs, adjust Rs and *d* so as to satisfy the above-described relationship, and adjust the value of Rs/(ρv×*d*) so as to fall within the above-described ranges in accordance with the thickness of the negative-electrode mixture layer. Furthermore, if the concentration of solid contents (total concentration of all components other than the solvent) in the negative-electrode mixture containing composition is set to about 52 to 60 mass%, for example, it is possible to suppress movement of the components of the negative-electrode mixture layer toward the surface of the applied film of the negative-electrode mixture containing composition that has not been dried, while the applied film is dried, and therefore, it is preferable to set the concentration of solid contents so as to fall within the above range, although this depends on the type of negative-electrode mixture. However, the method for adjusting Rs and *d* so as to satisfy the above-described relationship and the method for adjusting Rs/(ρv×*d*) do not depend only on the concentration of solid contents in the negative-electrode mixture containing composition.

Furthermore, it is also possible to adjust Rs and *d* so as to satisfy the above-described relationship and adjust the value of Rs/(ρv×*d*) so as to fall within the above-described ranges in accordance with the thickness of the negative-electrode mixture layer by forming an undercoat layer that contains a conductive aid on a surface of the current collector in advance, and forming the negative-electrode mixture layer on the undercoat layer using the method described above (method in which the negative-electrode mixture containing composition is used).

In this case, the various examples of conductive aids listed above as conductive aids that may be contained in the negative-electrode mixture layer may be contained in the undercoat layer. The undercoat layer may be formed of the conductive aid only, or may also contain a binder together with the conductive aid. The various examples of binders listed above as binders that may be contained in the negative-electrode mixture layer may be contained in the undercoat layer.

The thickness of the undercoat layer is preferably 50 to 1000 nm. The content of the conductive aid in the undercoat layer is 1 to 100 mass%, for example, and the content of the binder in the undercoat layer is 0 to 99 mass%, for example.

The undercoat layer can be formed by preparing an undercoat layer-forming composition by dispersing the conductive aid and the binder or the like, which is used as necessary, in water or an organic solvent such as NMP (the binder may be dissolved in the solvent), applying the prepared composition to a surface of the current collector, and drying the applied composition. In the case of a negative electrode including the undercoat layer, the negative-electrode mixture layer can be formed by applying the negative-electrode mixture containing composition to the surface of the undercoat layer formed on the surface of the current collector, by using the method described above. It is also possible to simultaneously form the undercoat layer and the negative-electrode mixture layer by applying the negative-electrode mixture containing composition on (an applied film of) the undercoat layer-forming composition applied to a surface of the current collector, without drying the undercoat layer-forming composition, and then drying the compositions, and performing press processing as necessary.

The content of the negative-electrode active material in the negative-electrode mixture layer is preferably 90 to 99 mass%.

A conductive aid may be contained in the negative-electrode mixture layer. Examples of methods for adding the conductive aid to the negative-electrode mixture layer include: a method of dispersing the conductive aid throughout the negative-electrode mixture layer; a method of forming the above-described undercoat layer; and a method of dispersing the conductive aid throughout the negative-electrode mixture layer and forming the above-described undercoat layer. In the case where the negative-electrode mixture layer contains the conductive aid, the content of the conductive aid in the negative-electrode mixture layer (in the case where the negative electrode includes the undercoat layer, including the amount of the conductive aid contained in the undercoat layer) is preferably 0.01 mass% or more, more preferably 0.05 mass% or more, and further preferably 0.08 mass% or more, and preferably less than 9.5 mass%, more preferably less than 5.0 mass%, and further preferably less than 3.0 mass%. The negative-electrode mixture layer need not necessarily contain the conductive aid.

If the amount of the conductive aid contained in the negative-electrode mixture layer is increased, the resistance value of the negative-electrode mixture layer can be reduced, and accordingly, the charging load characteristics of the battery tend to be improved, but storage characteristics of the battery tend to deteriorate. However, both the negative electrode according to the first embodiment and the negative electrode according to the second embodiment of the present invention make it possible to improve the charging load characteristics of the battery while suppressing deterioration of the storage characteristics of the battery by limiting the amount of the conductive aid in the negative-electrode mixture layer as described above.

The content of the binder in the negative-electrode mixture layer (in the case where the negative electrode includes the undercoat layer, including the amount of the binder contained in the undercoat layer) is preferably 1 to 10 mass%.

A lead body for electrically connecting the negative electrode to another member in the non-aqueous electrolyte secondary battery may be formed on the negative electrode using a conventional method, as necessary.

### <Non-Aqueous Electrolyte Secondary Battery>

A non-aqueous electrolyte secondary battery according to the present invention includes a positive electrode, a negative electrode, a separator interposed between the positive electrode and the negative electrode, and a non-aqueous electrolyte, and the negative electrode is the negative electrode for a non-aqueous electrolyte secondary battery (the negative electrode according to the first embodiment or the second embodiment) of the present invention.

As the positive electrode, it is possible to use a positive electrode that includes a positive-electrode mixture layer containing a positive-electrode active material, a conductive aid, a binder, and the like on one surface or both surfaces of a current collector, for example.

There is no particular limitation on the positive-electrode active material as long as a conventionally known positive-electrode active material for a non-aqueous electrolyte secondary battery, or in other words, an active material that can absorb and desorb Li ions is used. Specific examples of the positive-electrode active material include a spinel-type lithium manganese composite oxide represented by LiMₓMn₂₋ₓO₄, where M represents at least one element selected from the group consisting of Li, B, Mg, Ca, Sr, Ba, Ti, V, Cr, Fe, Co, Ni, Cu, Al, Sn, Sb, In, Nb, Mo, W, Y, Ru, and Rh, and 0.01 ≤ x ≤ 0.5, a layered compound represented by LiₓNi_{(1-y-z)}Mn_{y}M_{z}O₍₂₋ₖ₎Fₗ, where M represents at least one element selected from the group consisting of Co, Mg, Al, B, Ti, V, Cr, Fe, Cu, Zn, Zr, Mo, Sn, Ca, Sr, Ba, and W, 0.8 ≤ x ≤ 1.2, 0 ≤ y ≤ 0.5, 0 ≤ z ≤ 0.5, k+1 < 1, -0.1 ≤ k ≤ 0.2, and 0 ≤ l ≤ 0.1, a lithium cobalt composite oxide represented by LiCo₁₋ₓMₓO₂, where M represents at least one element selected from the group consisting ofAl, Mg, Ti, Zr, Fe, Ni, Cu, Zn, Ga, Ge, Nb, Mo, Sn, Sb, and Ba, and 0 ≤ x ≤ 0.5, a lithium nickel composite oxide represented by LiNi₁₋ₓMₓO₂, where M represents at least one element selected from the group consisting ofAl, Mg, Ti, Zr, Fe, Co, Cu, Zn, Ga, Ge, Nb, Mo, Sn, Sb, Mn, and Ba, and 0 ≤ x ≤ 0.5, an olivine-type composite oxide represented by LiM₁₋ₓNₓPO₄, where M represents at least one element selected from the group consisting of Fe, Mn, and Co, N represents at least one element selected from the group consisting ofAl, Mg, Ti, Zr, Ni, Cu, Zn, Ga, Ge, Nb, Mo, Sn, Sb, and Ba, and 0 ≤ x ≤ 0.5, a lithium titanium composite oxide represented by Li₄Ti₅O₁₂, and the like. These may be used alone or in a combination of two or more.

One or more of the examples of conductive aids listed above as conductive aids that may be contained in the negative-electrode mixture layer may be used as the conductive aid in the positive-electrode mixture layer.

One or more of the examples of binders listed above as binders that may be contained in the negative-electrode mixture layer may be used as the binder in the positive-electrode mixture layer.

The positive electrode is manufactured by preparing a positive-electrode mixture containing composition, which is a paste or a slurry, by dispersing the positive-electrode active material, the conductive aid, the binder, and the like in a solvent such as an organic solvent (e.g., NMP) or water (the binder may be dissolved in the solvent), applying the prepared composition to one surface or both surfaces of the current collector, drying the applied composition, and performing press processing such as calender processing as necessary, for example. However, the method for manufacturing the positive electrode is not limited to this method, and the positive electrode may be manufactured using another method.

A lead body for electrically connecting the positive electrode to another member in the non-aqueous electrolyte secondary battery may be formed on the positive electrode using a conventional method, as necessary.

The thickness of the positive-electrode mixture layer provided on one surface of the current collector is preferably 35 to 80 µm, for example. As for the composition of the positive-electrode mixture layer, the positive-electrode active material is preferably contained in an amount of 90 to 99.3 mass%, the conductive aid is preferably contained in an amount of 0.2 to 9.5 mass%, and the binder is preferably contained in an amount of 0.5 to 3 mass%, for example.

As the current collector in the positive electrode, it is possible to use a foil, a punched metal, a mesh, an expanded metal, or a foamed metal made of aluminum, stainless steel or the like, a carbon sheet, or the like. The thickness of the current collector is preferably 5 to 30 µm.

As the separator included in the non-aqueous electrolyte secondary battery, a separator that has a sufficient strength and is capable of retaining a large amount of non-aqueous electrolyte is preferable, and a microporous film made of a polyolefin such as polyethylene (PE) or polypropylene (PP) can be used. The microporous film constituting the separator may be made of only PE or PP, or may contain an ethylene-propylene copolymer, for example. It is also possible to use a laminate of a microporous film made of PE and a microporous film made of PP as the separator.

It is also possible to use a layered separator constituted by a porous layer mainly composed of a resin that has a melting point of 140°C or lower and a porous layer mainly composed of a resin that has a melting point of 150°C or higher or an inorganic filler for which a heat-resistant temperature is 150°C or higher. Here, the "melting point" means a melting temperature measured in accordance with Japanese Industrial Standard (JIS) K 7121 using a differential scanning calorimeter (DSC), and "heat-resistant temperature is 150°C or higher" means that deformation such as softening does not occur at least at 150°C.

The thickness of the separator (the separator constituted by a microporous film made of a polyolefin or the layered separator) is more preferably 10 to 30 µm.

As the non-aqueous electrolyte of the non-aqueous electrolyte secondary battery, a non-aqueous liquid electrolyte (non-aqueous electrolyte solution) is usually used. As the non-aqueous electrolyte solution, an electrolyte solution obtained by dissolving an electrolyte salt such as a lithium salt in an organic solvent is used. There is no particular limitation on the organic solvent, and examples of the organic solvent include: chain esters such as dimethyl carbonate, diethyl carbonate, ethyl methyl carbonate, and methyl propyl carbonate; cyclic esters that have a high dielectric constant such as ethylene carbonate, propylene carbonate, butylene carbonate, and vinylene carbonate; and a solvent mixture of a chain ester and a cyclic ester. In particular, a solvent mixture that contains a chain ester as the main solvent and a cyclic ester is suitably used.

Examples of the electrolyte salt dissolved in the organic solvent to prepare the non-aqueous electrolyte solution include LiPF₆, LiBF₄, LiAsF₆, LiSbF₆, LiCFsSOs, LiC₄F₉SO₃, LiCF₃CO₂, Li₂C₂F₄(SO₃)₂, LiCₙF₂ₙ₊₁SO₃, where n ≥ 2, LiN(RfSO₂)(Rf'SO₂), LiC(RfSO₂)₃, and LiN(RfOSO₂)₂, where Rf and Rf' each represent a fluoroalkyl group. These may be used alone or in a combination of two or more. There is no particular limitation on the concentration of the electrolyte salt in the non-aqueous electrolyte solution, but the concentration of the electrolyte salt is preferably 0.3 mol/l or more, and more preferably 0.4 mol/l or more, and preferably 1.7 mol/l or less, and more preferably 1.5 mol/l or less.

As the non-aqueous electrolyte included in the non-aqueous electrolyte secondary battery, it is possible to use, other than the non-aqueous electrolyte solution described above, a gel electrolyte obtained by gelling the non-aqueous electrolyte solution using a gelling agent made of a polymer or the like, or a known solid electrolyte.

In the non-aqueous electrolyte secondary battery, the positive electrode and the negative electrode can be used in the form of a stacked electrode assembly obtained by stacking the positive electrode and the negative electrode with the separator interposed therebetween, or in the form of a wound electrode assembly obtained by winding the stacked electrode assembly.

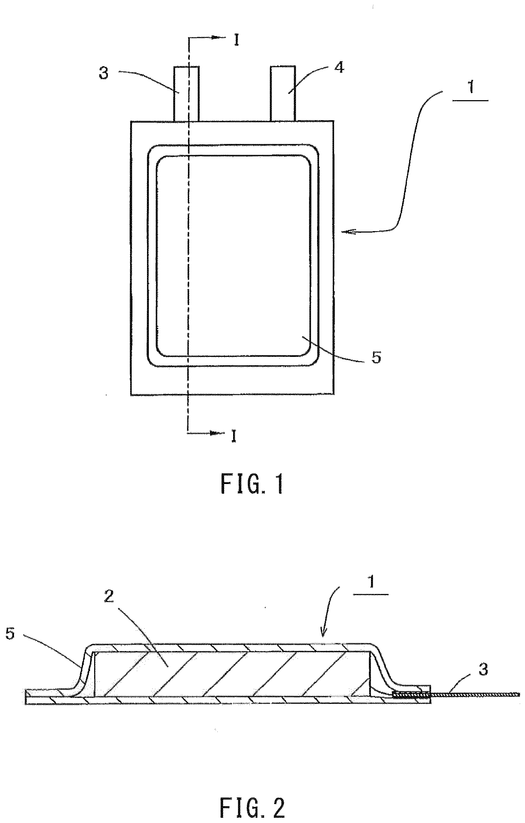

FIGS. 1 and 2 schematically show an example of the non-aqueous electrolyte secondary battery according to the present invention. FIG. 1 is a plan view of the non-aqueous electrolyte secondary battery, and FIG. 2 is a cross-sectional view taken along the line I-I shown in FIG. 1.

Anon-aqueous electrolyte secondary battery 1 shown in FIGS. 1 and 2 includes an electrode assembly 2 that is housed in a laminate film exterior body 5 that is formed using two metal laminate films, and the laminate film exterior body 5 is sealed by heat-sealing upper and lower metal laminate films at the outer peripheral portions thereof.

The electrode assembly 2 is a stacked electrode assembly or a wound electrode assembly obtained by stacking a positive electrode, the negative electrode for a non-aqueous electrolyte secondary battery according to the present invention, and a separator interposed between the positive electrode and the negative electrode, and a non-aqueous electrolyte is housed in the laminate film exterior body 5 together with the electrode assembly 2.

In FIG. 2, layers that constitute the laminate film exterior body 5 and the structural elements (the positive electrode, the negative electrode, and the separator) that constitute the electrode assembly 2 are not illustrated in order to avoid a complex drawing.

The positive electrode of the electrode assembly 2 is connected to a positive-electrode external terminal 3 in the battery 1. Also, although not shown in the diagram, the negative electrode of the electrode assembly 2 is connected to a negative-electrode external terminal 4 in the battery 1. One end of the positive-electrode external terminal 3 and one end of the negative-electrode external terminal 4 are provided outside the laminate film exterior body 5 so that the positive-electrode external terminal 3 and the negative-electrode external terminal 4 can be connected to an external device or the like.

The non-aqueous electrolyte secondary battery is manufactured by housing the electrode assembly such as a stacked electrode assembly or a wound electrode assembly in the exterior body, pouring the non-aqueous electrolyte into the exterior body to immerse the electrode assembly in the non-aqueous electrolyte, and thereafter sealing the opening of the exterior body, for example. As the exterior body, it is possible to use an exterior can made of steel, aluminum, or an aluminum alloy, or an exterior body formed using a laminate film on which metal is deposited, for example. Specific examples of a battery including an exterior can include: a flat-shaped (including coin-shaped and button-shaped) battery including a battery case that is sealed by crimping the exterior can and a sealing plate via a gasket or by welding the exterior can and the sealing plate; and a tubular battery having a bottomed tubular shape (cylindrical shape, rectangular cylindrical shape, etc.) that is sealed by providing a lid on the opening of the exterior can and crimping the exterior can and the lid via a gasket or welding the exterior can and the lid.

### <Method for Inspecting Negative Electrode for Non-Aqueous Electrolyte Secondary Battery>

The value of Rs/(ρv×*d*) in a negative electrode for a non-aqueous electrolyte secondary battery serves as an index of the charging load characteristics of a non-aqueous electrolyte secondary battery including the negative electrode. Therefore, whether or not the negative electrode for a non-aqueous electrolyte secondary battery is suitable to manufacture, for example, the non-aqueous electrolyte secondary battery according to the present invention can be determined using an inspection method of the present invention that includes: a step of measuring the interface resistance Rs (Ωcm²) between the negative-electrode mixture layer and the current collector, the volume resistivity pv (Ωcm) of the negative-electrode mixture layer, and the thickness *d* (cm) of the negative-electrode mixture layer, and calculating the value of Rs/(ρv×*d*); and a step of selecting a non-aqueous electrolyte secondary battery to which the negative electrode for a non-aqueous electrolyte secondary battery is to be applied, based on the value of Rs/(ρv×*d*). Note that even if the value of Rs/(ρv×*d*) does not satisfy (A) and (B) described above, and it is determined that the negative electrode cannot be used to manufacture the non-aqueous electrolyte secondary battery according to the present invention through the inspection method of the present invention, the negative electrode can be used in a battery that is not required to have a high degree of charging load characteristics, and accordingly, the negative electrode can be used to manufacture such a battery.

Also, the relationship between Rs and *d* in a negative electrode for a non-aqueous electrolyte secondary battery serves as an index of the charging load characteristics of a non-aqueous electrolyte secondary battery including the negative electrode. Therefore, whether or not the negative electrode for a non-aqueous electrolyte secondary battery is suitable to manufacture, for example, the non-aqueous electrolyte secondary battery according to the present invention can be determined using an inspection method of the present invention that includes: a step of measuring the interface resistance Rs (Ωcm²) between the negative-electrode mixture layer and the current collector and the thickness *d* (cm) of the negative-electrode mixture layer; and a step of selecting a non-aqueous electrolyte secondary battery to which the negative electrode for a non-aqueous electrolyte secondary battery is to be applied, based on a relationship between the measured Rs and *d.* Note that even if Rs and *d* do not satisfy the relationship: Rs ≤ 1.67*d*(where *b* is -0.01 or more and 0 or less) described above, and it is determined that the negative electrode cannot be used to manufacture the non-aqueous electrolyte secondary battery according to the present invention through the inspection method of the present invention, the negative electrode can be used in a battery that is not required to have a high degree of charging load characteristics, and accordingly, the negative electrode can be used to manufacture such a battery.

### Examples

The following describes the present invention in detail based on examples. However, the following examples do not limit the present invention.

### Example 1

### <Manufacture of Positive Electrode>

A positive-electrode mixture containing slurry (concentration of solid contents other than the solvent was 75 mass%) was prepared by mixing Li_{1.01}Ni_{0.5}Co_{0.2}Mn_{0.3}O₂ (positive-electrode active material), acetylene black (conductive aid), and PVDF (binder) at a mass ratio of 94:4:2 and dispersing the mixture in NMP.

The positive-electrode mixture containing slurry was intermittently applied to both surfaces of an aluminum foil with a thickness of 15 µm, which was used as a current collector, and dried. Thereafter, calender processing was performed to adjust the entire thickness to 95 µm by adjusting the thicknesses of positive-electrode mixture layers. The resultant laminate was cut to obtain an elongated positive electrode. Furthermore, an aluminum lead piece for taking out a current was welded to an exposed portion of the aluminum foil, and thus a positive electrode provided with a lead was obtained. The thickness of the positive-electrode mixture layer provided on each surface of the current collector in the obtained positive electrode was 40 µm.

### <Manufacture of Negative Electrode>

A negative-electrode mixture containing paste (concentration of solid contents other than the solvent was 50 mass%) was prepared by mixing graphite (negative-electrode active material), CMC (binder), and SBR (binder) at a mass ratio of 96:2:2, and dispersing the mixture in water.

The negative-electrode mixture containing paste was intermittently applied to one surface of a copper foil with a thickness of 8 µm, which was used as a current collector, and dried by using a drying furnace including three dryers and setting the most upstream dryer 1 to 115°C, an intermediate dryer 2 to 115°C, and the most downstream dryer 3 to 120°C, to form a negative-electrode mixture layer. A negative-electrode mixture layer was also formed on the other surface of the copper foil in the same manner, and thus the negative-electrode mixture layers were formed on both surfaces of the copper foil. After drying, calender processing was performed to adjust the entire thickness to 80 µm by adjusting the thicknesses of the negative-electrode mixture layers. The resultant laminate was cut to obtain an elongated negative electrode. Furthermore, a nickel lead piece for taking out a current was welded to an exposed portion of the copper foil, and thus a negative electrode provided with a lead was obtained. The thickness of the negative-electrode mixture layer provided on each surface of the current collector in the obtained negative electrode was 36 µm.

### <Preparation of Non-Aqueous Electrolyte Solution>

Anon-aqueous electrolyte solution was prepared by dissolving LiPF₆ at a concentration of 1.0 mol/l in a solvent obtained by mixing ethylene carbonate and diethyl carbonate at a volume ratio of 3:7, and further adding vinylene carbonate in an amount of 2 mass%.

### <Assembly of Non-Aqueous Electrolyte Secondary Battery>

The positive electrode and the negative electrode were stacked on each other via a separator (microporous film made of PE with a thickness of 16 µm and a porosity of 40%), and the stack was spirally wound to obtain a wound electrode assembly. The wound electrode assembly and the non-aqueous electrolyte solution were housed in an aluminum laminate film exterior body and the exterior body was sealed, and thus a non-aqueous electrolyte secondary battery was manufactured.

### Comparative Example 1

A negative electrode was manufactured in the same manner as in Example 1, except that the applied film of the negative-electrode mixture containing paste was dried by using the drying furnace including three dryers and setting the most upstream dryer 1 to 120°C, the intermediate dryer 2 to 120°C, and the most downstream dryer 3 to 120°C. A non-aqueous electrolyte secondary battery was manufactured in the same manner as in Example 1, except that the negative electrode was used.

Charging load characteristics of the non-aqueous electrolyte secondary batteries of Example 1 and Comparative Example 1 were evaluated as follows.

### [Evaluation of Charging Load Characteristics]

In an environment at 25°C, the batteries of Example 1 and Comparative Example 1 were subjected to CC charging at a current value of 0.5 C until the voltage reached 4.2 V, and subsequently subjected to CV charging at a voltage of 4.2 V until the current value reached 0.02 C. Thereafter, each battery was subjected to constant current (CC) discharging at a current value of 0.2 C until the voltage reached 2.75 V in an environment at 25°C.

Each discharged battery was placed in a thermostatic chamber adjusted to 35°C, and after the temperature of the battery was stabilized, the battery was charged at a current value of 2.5 C, and a voltage V1 was measured after 1 second. A voltage V0 before the start of charging was subtracted from the voltage V1 to obtain a value ΔV, and the charging load characteristics of the battery were evaluated based on the value ΔV The smaller the value ΔV is, the larger the amount of electricity with which the battery can be charged until the voltage reaches an end voltage in CC charging performed at the current value as large as 2.5 C is, and therefore, the better the charging load characteristics of the battery are.

Results of the above-described evaluation are shown in Table 1 together with the thickness of the negative-electrode mixture layer in the negative electrode, 1.67*d*, Rs, pv, and Rs/(ρv×*d*). In Table 1, the evaluation results of the charging load characteristics are each shown as a relative value when the value of Comparative Example 1 is taken as 100.

**Table 1**

| | Negative electrode | | | | | Charging load characteristics |
|---|---|---|---|---|---|---|
| | Thickness (µm) of negative-electrode mixture layer | 1.67*d* | ρv (Ωcm) | Rs (Ωcm²) | Rs/(ρv×*d*) | |
| Ex. 1 | 36 | 0.006012 | 0.07361 | 0.002518 | 9.50 | 99 |
| Com. Ex. 1 | 36 | 0.006012 | 0.07426 | 0.006231 | 23.3 | 100 |

As shown in Table 1, the non-aqueous electrolyte secondary battery of Example 1 including the negative electrode in which the thickness of the negative-electrode mixture layer was 35 µm or more and less than 50 µm, the value of Rs/(ρv×*d*) was appropriate, and the relationship: Rs ≤ 1.67*d* + *b* (*b*=0) was satisfied had excellent charging load characteristics compared with the battery of Comparative Example 1 including the negative electrode for which the value of Rs/(ρv×*d*) was inappropriate and the relationship: Rs ≤ 1.67*d* + *b* (*b*=0) was not satisfied.

### Example 2

A negative electrode was manufactured in the same manner as in Example 1, except that the thickness of the negative-electrode mixture layer provided on each surface of the current collector was changed to 41 µm by adjusting the amount of the negative-electrode mixture containing paste applied to the current collector. A non-aqueous electrolyte secondary battery was manufactured in the same manner as in Example 1, except that the negative electrode was used.

### Comparative Example 2

A negative electrode was manufactured in the same manner as in Comparative Example 1, except that the thickness of the negative-electrode mixture layer provided on each surface of the current collector was changed to 40 µm by adjusting the amount of the negative-electrode mixture containing paste applied to the current collector. A non-aqueous electrolyte secondary battery was manufactured in the same manner as in Comparative Example 1, except that the negative electrode was used.

The charging load characteristics of the non-aqueous electrolyte secondary batteries of Example 2 and Comparative Example 2 were evaluated using the same method as that used to evaluate the battery of Example 1. Evaluation results are shown in Table 2 together with the thickness of the negative-electrode mixture layer in the negative electrode, 1.67*d,* Rs, pv, and Rs/(ρv×*d*). In Table 2, the evaluation results of the charging load characteristics are each shown as a relative value when the value of Comparative Example 2 is taken as 100.

**Table 2**

| | Negative electrode | | | | | Charging load characteristics |
|---|---|---|---|---|---|---|
| | Thickness (µm) of negative-electrode mixture layer | 1.67*d* | ρv (Ωcm) | Rs (Ωcm²) | Rs/(ρv×*d*) | |
| Ex. 2 | 41 | 0.006847 | 0.06475 | 0.004645 | 17.50 | 98 |
| Com. Ex. 2 | 40 | 0.006680 | 0.07775 | 0.007158 | 23.02 | 100 |

As shown in Table 2, the non-aqueous electrolyte secondary battery of Example 2 including the negative electrode in which the thickness of the negative-electrode mixture layer was 35 µm or more and less than 50 µm, the value of Rs/(ρv×*d*) was appropriate, and the relationship: Rs ≤ 1.67*d* + *b* (*b*=0) was satisfied had excellent charging load characteristics compared with the battery of Comparative Example 2 including the negative electrode for which the value of Rs/(ρv×*d*) was inappropriate and the relationship: Rs ≤ 1.67*d* + *b* (*b*=0) was not satisfied.

### Example 3

A negative electrode was manufactured in the same manner as in Example 1, except that the thickness of the negative-electrode mixture layer provided on each surface of the current collector was changed to 45 µm by adjusting the amount of the negative-electrode mixture containing paste applied to the current collector. A non-aqueous electrolyte secondary battery was manufactured in the same manner as in Example 1, except that the negative electrode was used.

### Example 4

A negative electrode was manufactured in the same manner as in Example 3, except that the applied film of the negative-electrode mixture containing paste was dried by using the drying furnace including three dryers and setting the most upstream dryer 1 to 115°C, the intermediate dryer 2 to 110°C, and the most downstream dryer 3 to 115°C. The thickness of the negative-electrode mixture layer provided on each surface of the current collector in the obtained negative electrode was 46 µm. A non-aqueous electrolyte secondary battery was manufactured in the same manner as in Example 1, except that the negative electrode was used.

### Comparative Example 3

A negative electrode was manufactured in the same manner as in Example 3, except that the applied film of the negative-electrode mixture containing paste was dried by using the drying furnace including three dryers and setting the most upstream dryer 1 to 120°C, the intermediate dryer 2 to 120°C, and the most downstream dryer 3 to 120°C. The thickness of the negative-electrode mixture layer provided on each surface of the current collector in the obtained negative electrode was 47 µm. A non-aqueous electrolyte secondary battery was manufactured in the same manner as in Example 1, except that the negative electrode was used.

The charging load characteristics of the non-aqueous electrolyte secondary batteries of Examples 3 and 4 and Comparative Example 3 were evaluated using the same method as that used to evaluate the battery of Example 1. Evaluation results are shown in Table 3 together with the thickness of the negative-electrode mixture layer in the negative electrode, 1.67*d*, Rs, pv, and Rs/(ρv×*d*). In Table 3, the evaluation results of the charging load characteristics are each shown as a relative value when the value of Comparative Example 3 is taken as 100.

**Table 3**

| | Negative electrode | | | | | Charging load characteristics |
|---|---|---|---|---|---|---|
| | Thickness (µm) of negative-electrode mixture layer | 1.67*d* | ρv (Ωcm) | Rs (Ωcm²) | Rs/(ρv×d) | |
| Ex. 3 | 45 | 0.007515 | 0.07548 | 0.006312 | 18.58 | 98 |
| Ex. 4 | 46 | 0.007682 | 0.06946 | 0.00422 | 13.21 | 97 |
| Com. Ex. 3 | 47 | 0.007849 | 0.08252 | 0.008105 | 20.90 | 100 |

As shown in Table 3, the non-aqueous electrolyte secondary batteries of Examples 3 and 4 including the negative electrodes in which the thickness of the negative-electrode mixture layer was 35 µm or more and less than 50 µm, the value of Rs/(ρv×*d*) was appropriate, and the relationship: Rs ≤ 1.67*d* + *b* (*b*=0) was satisfied had excellent charging load characteristics compared with the battery of Comparative Example 3 including the negative electrode for which the value of Rs/(ρv×*d*) was inappropriate and the relationship: Rs ≤ 1.67*d*+ *b* (*b*=0) was not satisfied.

### Example 5

A negative electrode was manufactured in the same manner as in Example 1, except that the current collector was changed to a copper foil with a thickness of 6 µm and the thickness of the negative-electrode mixture layer provided on each surface of the current collector was changed to 56 µm by adjusting the amount of the negative-electrode mixture containing paste applied to the current collector. A non-aqueous electrolyte secondary battery was manufactured in the same manner as in Example 1, except that the negative electrode was used.

### Example 6

A negative electrode was manufactured in the same manner as in Example 5, except that the applied film of the negative-electrode mixture containing paste was dried by using the drying furnace including three dryers and setting the most upstream dryer 1 to 115°C, the intermediate dryer 2 to 110°C, and the most downstream dryer 3 to 115°C. A non-aqueous electrolyte secondary battery was manufactured in the same manner as in Example 1, except that the negative electrode was used.

### Comparative Example 4

A negative electrode was manufactured in the same manner as in Example 5, except that the applied film of the negative-electrode mixture containing paste was dried by using the drying furnace including three dryers and setting the most upstream dryer 1 to 120°C, the intermediate dryer 2 to 120°C, and the most downstream dryer 3 to 120°C. A non-aqueous electrolyte secondary battery was manufactured in the same manner as in Example 1, except that the negative electrode was used.

The charging load characteristics of the non-aqueous electrolyte secondary batteries of Examples 5 and 6 and Comparative Example 4 were evaluated in the same manner as in Example 1, except that the end voltage in the CC discharging was changed to 3 V when the batteries were initially subjected to the CC charging, CV charging, and CC discharging. Evaluation results are shown in Table 4 together with the thickness of the negative-electrode mixture layer in the negative electrode, 1.67*d*, Rs, pv, and Rs/(ρv×*d*). In Table 4, the evaluation results of the charging load characteristics are each shown as a relative value when the value of Comparative Example 4 is taken as 100.

**Table 4**

| | Negative electrode | | | | | Charging load characteristics |
|---|---|---|---|---|---|---|
| | Thickness (µm) of negative-electrode mixture layer | 1.67*d* | ρv (Ωcm) | Rs (Ωcm²) | Rs/(ρv×*d*) | |
| Ex. 5 | 56 | 0.00935 | 0.05822 | 0.00826 | 25.33 | 97 |
| Ex. 6 | 56 | 0.00935 | 0.05152 | 0.004684 | 16.24 | 93 |
| Com. Ex. 4 | 56 | 0.00935 | 0.05479 | 0.01188 | 38.72 | 100 |

As shown in Table 4, the non-aqueous electrolyte secondary batteries of Examples 5 and 6 including the negative electrodes in which the thickness of the negative-electrode mixture layer was 50 µm or more and 100 µm or less, the value of Rs/(ρv×*d*) was appropriate, and the relationship: Rs ≤ 1.67*d* + *b* (*b*=0) was satisfied had excellent charging load characteristics compared with the battery of Comparative Example 4 including the negative electrode for which the value of Rs/(pv×*d*) was inappropriate and the relationship: Rs ≤ 1.67*d* + *b* (*b*=0) was not satisfied.

### Example 7

A negative electrode was manufactured in the same manner as in Example 1, except that the amount of the negative-electrode mixture containing paste applied to the current collector was changed and the applied film of the negative-electrode mixture containing paste was dried by using the drying furnace including three dryers and setting the most upstream dryer 1 to 115°C, the intermediate dryer 2 to 110°C, and the most downstream dryer 3 to 120°C. The thickness of the negative-electrode mixture layer provided on each surface of the current collector in the obtained negative electrode was 63 µm. Anon-aqueous electrolyte secondary battery was manufactured in the same manner as in Example 1, except that the negative electrode was used.

### Comparative Example 5

A negative electrode was manufactured in the same manner as in Example 7, except that the applied film of the negative-electrode mixture containing paste was dried by using the drying furnace including three dryers and setting the most upstream dryer 1 to 120°C, the intermediate dryer 2 to 120°C, and the most downstream dryer 3 to 120°C. A non-aqueous electrolyte secondary battery was manufactured in the same manner as in Example 1, except that the negative electrode was used.

The charging load characteristics of the non-aqueous electrolyte secondary batteries of Example 7 and Comparative Example 5 were evaluated using the same method as that used to evaluate the battery of Example 5. Evaluation results are shown in Table 5 together with the thickness of the negative-electrode mixture layer in the negative electrode, 1.67*d*, Rs, pv, and Rs/(ρv×*d*). In Table 5, the evaluation results of the charging load characteristics are each shown as a relative value when the value of Comparative Example 5 is taken as 100.

**Table 5**

| | Negative electrode | | | | | Charging load characteristics |
|---|---|---|---|---|---|---|
| | Thickness (µm) of negative-electrode mixture layer | 1.67*d* | ρv (Ωcm) | Rs (Ωcm²) | Rs/(ρv×*d*) | |
| Ex. 7 | 63 | 0.01052 | 0.04311 | 0.01014 | 37.34 | 96 |
| Com. Ex. 5 | 63 | 0.01052 | 0.04959 | 0.01426 | 45.64 | 100 |

As shown in Table 5, the non-aqueous electrolyte secondary battery of Example 7 including the negative electrode in which the thickness of the negative-electrode mixture layer was 50 µm or more and 100 µm or less, the value of Rs/(ρv×*d*) was appropriate, and the relationship: Rs ≤1.67*d* + *b* (*b*=0) was satisfied had excellent charging load characteristics compared with the battery of Comparative Example 5 including the negative electrode for which the value of Rs/(ρv×*d*) was inappropriate and the relationship: Rs ≤ 1.67*d* + *b* (*b*=0) was not satisfied.

### Example 8

A negative electrode was manufactured in the same manner as in Example 1, except that the thickness of the negative-electrode mixture layer provided on each surface of the current collector was changed to 68 µm by adjusting the amount of the negative-electrode mixture containing paste applied to the current collector. A non-aqueous electrolyte secondary battery was manufactured in the same manner as in Example 1, except that the negative electrode was used.

### Example 9

A negative electrode was manufactured in the same manner as in Example 8, except that the applied film of the negative-electrode mixture containing paste was dried by using the drying furnace including three dryers and setting the most upstream dryer 1 to 115°C, the intermediate dryer 2 to 110°C, and the most downstream dryer 3 to 115°C. A non-aqueous electrolyte secondary battery was manufactured in the same manner as in Example 1, except that the negative electrode was used.

### Example 10

A negative electrode was manufactured in the same manner as in Example 8, except that the applied film of the negative-electrode mixture containing paste was dried by using the drying furnace including three dryers and setting the most upstream dryer 1 to 110°C, the intermediate dryer 2 to 105°C, and the most downstream dryer 3 to 115°C. A non-aqueous electrolyte secondary battery was manufactured in the same manner as in Example 1, except that the negative electrode was used.

### Comparative Example 6

A negative electrode was manufactured in the same manner as in Example 8, except that the applied film of the negative-electrode mixture containing paste was dried by using the drying furnace including three dryers and setting the most upstream dryer 1 to 120°C, the intermediate dryer 2 to 120°C, and the most downstream dryer 3 to 120°C. A non-aqueous electrolyte secondary battery was manufactured in the same manner as in Example 1, except that the negative electrode was used.

The charging load characteristics of the non-aqueous electrolyte secondary batteries of Examples 8 to 10 and Comparative Example 6 were evaluated using the same method as that used to evaluate the battery of Example 5. Evaluation results are shown in Table 6 together with the thickness of the negative-electrode mixture layer in the negative electrode, 1.67*d*, Rs, pv, and Rs/(ρv×*d*). In Table 6, the evaluation results of the charging load characteristics are each shown as a relative value when the value of Comparative Example 6 is taken as 100.

**Table 6**

| | Negative electrode | | | | | Charging load characteristics |
|---|---|---|---|---|---|---|
| | Thickness (µm) of negative-electrode mixture layer | 1.67*d* | ρv (Ωcm) | Rs (Ωcm²) | Rs/(ρv×*d*) | |
| Ex. 8 | 68 | 0.01136 | 0.04179 | 0.01064 | 37.44 | 96 |
| Ex. 9 | 68 | 0.01136 | 0.04258 | 0.00702 | 24.25 | 94 |
| Ex. 10 | 68 | 0.01136 | 0.04551 | 0.004819 | 15.57 | 93 |
| Com. Ex. 6 | 68 | 0.01136 | 0.05132 | 0.01483 | 42.50 | 100 |

As shown in Table 6, the non-aqueous electrolyte secondary batteries of Examples 8 to 10 including the negative electrodes in which the thickness of the negative-electrode mixture layer was 50 µm or more and 100 µm or less, the value of Rs/(pv×*d*) was appropriate, and the relationship: Rs ≤1.67*d* + *b* (*b*=0) was satisfied had excellent charging load characteristics compared with the battery of Comparative Example 6 including the negative electrode for which the value of Rs/(ρv×*d*) was inappropriate and the relationship: Rs ≤ 1.67*d* + *b* (*b*=0) was not satisfied.

### Example 11

A negative electrode was manufactured in the same manner as in Example 1, except that the amount of the negative-electrode mixture containing paste applied to the current collector was changed and the applied film of the negative-electrode mixture containing paste was dried by using the drying furnace including three dryers and setting the most upstream dryer 1 to 115°C, the intermediate dryer 2 to 110°C, and the most downstream dryer 3 to 120°C. The thickness of the negative-electrode mixture layer provided on each surface of the current collector in the obtained negative electrode was 73 µm. Anon-aqueous electrolyte secondary battery was manufactured in the same manner as in Example 1, except that the negative electrode was used.

### Comparative Example 7

A negative electrode was manufactured in the same manner as in Example 11, except that the applied film of the negative-electrode mixture containing paste was dried by using the drying furnace including three dryers and setting the most upstream dryer 1 to 120°C, the intermediate dryer 2 to 120°C, and the most downstream dryer 3 to 120°C. A non-aqueous electrolyte secondary battery was manufactured in the same manner as in Example 1, except that the negative electrode was used.

The charging load characteristics of the non-aqueous electrolyte secondary batteries of Example 11 and Comparative Example 7 were evaluated using the same method as that used to evaluate the battery of Example 5. Evaluation results are shown in Table 7 together with the thickness of the negative-electrode mixture layer in the negative electrode, 1.67*d*, Rs, pv, and Rs/(ρv×*d*). In Table 7, the evaluation results of the charging load characteristics are each shown as a relative value when the value of Comparative Example 7 is taken as 100.

**Table 7**

| | Negative electrode | | | | | Charging load characteristics |
|---|---|---|---|---|---|---|
| | Thickness (µm) of negative-electrode mixture layer | 1.67*d* | ρv (Ωcm) | Rs (Ωcm²) | Rs/(ρv×*d*) | |
| Ex. 11 | 73 | 0.01219 | 0.04714 | 0.01126 | 32.72 | 95 |
| Com. Ex. 7 | 73 | 0.01219 | 0.04648 | 0.01385 | 40.82 | 100 |

As shown in Table 7, the non-aqueous electrolyte secondary battery of Example 11 including the negative electrode in which the thickness of the negative-electrode mixture layer was 50 µm or more and 100 µm or less, the value of Rs/(ρv×*d*) was appropriate, and the relationship: Rs ≤ 1.67*d* + *b* (*b*=0) was satisfied had excellent charging load characteristics compared with the battery of Comparative Example 7 including the negative electrode for which the value of Rs/(ρv×*d*) was inappropriate and the relationship: Rs ≤ 1.67*d* + *b* (*b*=0) was not satisfied.

### Example 12

A negative electrode was manufactured in the same manner as in Example 5, except that the amount of the negative-electrode mixture containing paste applied to the current collector was changed and the applied film of the negative-electrode mixture containing paste was dried by using the drying furnace including three dryers and setting the most upstream dryer 1 to 115°C, the intermediate dryer 2 to 110°C, and the most downstream dryer 3 to 120°C. The thickness of the negative-electrode mixture layer provided on each surface of the current collector in the obtained negative electrode was 77 µm. Anon-aqueous electrolyte secondary battery was manufactured in the same manner as in Example 1, except that the negative electrode was used.

### Comparative Example 8

A negative electrode was manufactured in the same manner as in Example 12, except that the applied film of the negative-electrode mixture containing paste was dried by using the drying furnace including three dryers and setting the most upstream dryer 1 to 120°C, the intermediate dryer 2 to 120°C, and the most downstream dryer 3 to 120°C. A non-aqueous electrolyte secondary battery was manufactured in the same manner as in Example 1, except that the negative electrode was used.

The charging load characteristics of the non-aqueous electrolyte secondary batteries of Example 12 and Comparative Example 8 were evaluated using the same method as that used to evaluate the battery of Example 1, except that the end voltage in the CC charging was changed to 4.4 V when the batteries were initially subjected to the CC charging, CV charging, and CC discharging. Evaluation results are shown in Table 8 together with the thickness of the negative-electrode mixture layer in the negative electrode, 1.67*d*, Rs, pv, and Rs/(ρv×*d*). In Table 8, the evaluation results of the charging load characteristics are each shown as a relative value when the value of Comparative Example 8 is taken as 100.

**Table 8**

| | Negative electrode | | | | | Charging load characteristics |
|---|---|---|---|---|---|---|
| | Thickness (µm) of negative-electrode mixture layer | 1.67*d* | ρv (Ωcm) | Rs (Ωcm²) | Rs/(ρv×*d*) | |
| Ex. 12 | 77 | 0.01286 | 0.04518 | 0.01243 | 35.73 | 95 |
| Com. Ex. 8 | 77 | 0.01286 | 0.04417 | 0.01362 | 40.05 | 100 |

As shown in Table 8, the non-aqueous electrolyte secondary battery of Example 12 including the negative electrode in which the thickness of the negative-electrode mixture layer was 50 µm or more and 100 µm or less, the value of Rs/(ρv×*d*) was appropriate, and the relationship: Rs ≤ 1.67*d* + *b* (*b*=0) was satisfied had excellent charging load characteristics compared with the battery of Comparative Example 8 including the negative electrode for which the value of Rs/(ρv×*d*) was inappropriate and the relationship: Rs ≤1.67*d* + *b* (*b*=0) was not satisfied.

### Example 13

A negative electrode was manufactured in the same manner as in Example 5, except that the thickness of the negative-electrode mixture layer provided on each surface of the current collector was changed to 80 µm by adjusting the amount of the negative-electrode mixture containing paste applied to the current collector. A non-aqueous electrolyte secondary battery was manufactured in the same manner as in Example 1, except that the negative electrode was used.

### Example 14

A negative electrode was manufactured in the same manner as in Example 13, except that the applied film of the negative-electrode mixture containing paste was dried by using the drying furnace including three dryers and setting the most upstream dryer 1 to 115°C, the intermediate dryer 2 to 110°C, and the most downstream dryer 3 to 115°C. A non-aqueous electrolyte secondary battery was manufactured in the same manner as in Example 1, except that the negative electrode was used.

### Example 15

A negative electrode was manufactured in the same manner as in Example 13, except that the applied film of the negative-electrode mixture containing paste was dried by using the drying furnace including three dryers and setting the most upstream dryer 1 to 110°C, the intermediate dryer 2 to 105°C, and the most downstream dryer 3 to 115°C. A non-aqueous electrolyte secondary battery was manufactured in the same manner as in Example 1, except that the negative electrode was used.

### Example 16

An undercoat layer-forming composition prepared by dispersing vapor-grown carbon fiber (conductive aid) and chitosan (binder) used at a mass ratio of 30:70 in NMP was applied to both surfaces of the same current collector (copper foil) as that used in Example 1, and dried to form an undercoat layer with a thickness of 0.5 µm on each surface of the current collector.

A negative electrode was manufactured in the same manner as in Example 13, except that the current collector on which the undercoat layer had been formed was used and the applied film of the negative-electrode mixture containing paste was dried by using the drying furnace including three dryers and setting the most upstream dryer 1 to 120°C, the intermediate dryer 2 to 120°C, and the most downstream dryer 3 to 120°C. Anon-aqueous electrolyte secondary battery was manufactured in the same manner as in Example 1, except that the negative electrode was used. The thickness of the negative-electrode mixture layer including the undercoat layer on each surface of the current collector was 80 µm, and the negative-electrode mixture layer including the undercoat layer contained 95.7 mass% of the negative-electrode active material, 0.1 mass% of the conductive aid, and 4.2 mass% of the binder.

### Example 17

A negative-electrode mixture containing paste was prepared in the same manner as in Example 1, except that the concentration of solid contents other than the solvent was changed to 53 mass%. A negative electrode was manufactured in the same manner as in Example 13, except that the negative-electrode mixture containing paste was used and the applied film of the negative-electrode mixture containing paste was dried by using the drying furnace including three dryers and setting the most upstream dryer 1 to 120°C, the intermediate dryer 2 to 120°C, and the most downstream dryer 3 to 120°C. Anon-aqueous electrolyte secondary battery was manufactured in the same manner as in Example 1, except that the negative electrode was used.

### Example 18

Graphite (negative-electrode active material), CMC (binder), SBR (binder), and "SUPER-C45 (product name)" manufactured by TIMCAL Ltd., which was used as a conductive aid, were mixed at a mass ratio of 95:2:2:1, and the mixture was dispersed in water to prepare a negative-electrode mixture containing paste (concentration of solid contents other than the solvent was 44 mass%). A negative electrode was manufactured in the same manner as in Example 13, except that the negative-electrode mixture containing paste was used and the applied film of the negative-electrode mixture containing paste was dried by using the drying furnace including three dryers and setting the most upstream dryer 1 to 120°C, the intermediate dryer 2 to 120°C, and the most downstream dryer 3 to 120°C. A non-aqueous electrolyte secondary battery was manufactured in the same manner as in Example 1, except that the negative electrode was used.

### Comparative Example 9

A negative electrode was manufactured in the same manner as in Example 13, except that the applied film of the negative-electrode mixture containing paste was dried by using the drying furnace including three dryers and setting the most upstream dryer 1 to 120°C, the intermediate dryer 2 to 120°C, and the most downstream dryer 3 to 120°C. A non-aqueous electrolyte secondary battery was manufactured in the same manner as in Example 1, except that the negative electrode was used.

The charging load characteristics of the non-aqueous electrolyte secondary batteries of Examples 13 to 18 and Comparative Example 9 were evaluated in the same manner as in Example 1, except that the end voltage in the CC charging was changed to 4.35 V and the end voltage in the CC discharging was changed to 3 V when the batteries were initially subjected to the CC charging, CV charging, and CC discharging. Evaluation results are shown in Table 9 together with the thickness of the negative-electrode mixture layer in the negative electrode, 1.67*d*, Rs, pv, and Rs/(ρv×*d*). In Table 9, the evaluation results of the charging load characteristics are each shown as a relative value when the value of Comparative Example 9 is taken as 100.

**Table 9**

| | Negative electrode | | | | | Charging load characteristics |
|---|---|---|---|---|---|---|
| | Thickness (µm) of negative-electrode mixture layer | 1.67*d* | ρv (Ωcm) | Rs (Ωcm²) | Rs/(ρv×*d*) | |
| Ex. 13 | 80 | 0.01336 | 0.04349 | 0.01198 | 34.43 | 95 |
| Ex. 14 | 80 | 0.01336 | 0.04521 | 0.007736 | 21.39 | 91 |
| Ex. 15 | 80 | 0.01336 | 0.04415 | 0.005383 | 15.24 | 87 |
| Ex. 16 | 80 | 0.01336 | 0.04381 | 0.0092 | 26.25 | 94 |
| Ex. 17 | 80 | 0.01336 | 0.04454 | 0.0108 | 30.31 | 94 |
| Ex. 18 | 80 | 0.01336 | 0.04497 | 0.0088 | 24.46 | 94 |
| Com. Ex. 9 | 80 | 0.01336 | 0.0495 | 0.01629 | 41.14 | 100 |

As shown in Table 9, the non-aqueous electrolyte secondary batteries of Examples 13 to 18 including the negative electrodes in which the thickness of the negative-electrode mixture layer was 50 µm or more and 100 µm or less, the value of Rs/(ρv×*d*) was appropriate, and the relationship: Rs ≤ 1.67*d* + *b* (*b*=0) was satisfied had excellent charging load characteristics compared with the battery of Comparative Example 9 including the negative electrode for which the value of Rs/(ρv×*d*) was inappropriate and the relationship: Rs ≤1.67*d* + *b* (*b*=0) was not satisfied.

### Example 19

A negative electrode was manufactured in the same manner as in Example 1, except that the thickness of the negative-electrode mixture layer provided on each surface of the current collector was changed to 91 µm by adjusting the amount of the negative-electrode mixture containing paste applied to the current collector. A non-aqueous electrolyte secondary battery was manufactured in the same manner as in Example 1, except that the negative electrode was used.

### Example 20

A negative electrode was manufactured in the same manner as in Example 19, except that the applied film of the negative-electrode mixture containing paste was dried by using the drying furnace including three dryers and setting the most upstream dryer 1 to 115°C, the intermediate dryer 2 to 110°C, and the most downstream dryer 3 to 120°C. A non-aqueous electrolyte secondary battery was manufactured in the same manner as in Example 1, except that the negative electrode was used.

### Example 21

A negative electrode was manufactured in the same manner as in Example 19, except that the applied film of the negative-electrode mixture containing paste was dried by using the drying furnace including three dryers and setting the most upstream dryer 1 to 115°C, the intermediate dryer 2 to 110°C, and the most downstream dryer 3 to 115°C. A non-aqueous electrolyte secondary battery was manufactured in the same manner as in Example 1, except that the negative electrode was used.

### Example 22

A negative electrode was manufactured in the same manner as in Example 19, except that the applied film of the negative-electrode mixture containing paste was dried by using the drying furnace including three dryers and setting the most upstream dryer 1 to 110°C, the intermediate dryer 2 to 105°C, and the most downstream dryer 3 to 115°C. A non-aqueous electrolyte secondary battery was manufactured in the same manner as in Example 1, except that the negative electrode was used.

### Comparative Example 10

A negative electrode was manufactured in the same manner as in Example 19, except that the applied film of the negative-electrode mixture containing paste was dried by using the drying furnace including three dryers and setting the most upstream dryer 1 to 120°C, the intermediate dryer 2 to 120°C, and the most downstream dryer 3 to 120°C. A non-aqueous electrolyte secondary battery was manufactured in the same manner as in Example 1, except that the negative electrode was used.

The charging load characteristics of the non-aqueous electrolyte secondary batteries of Examples 19 to 22 and Comparative Example 10 were evaluated using the same method as that used to evaluate the battery of Example 5. Evaluation results are shown in Table 10 together with the thickness of the negative-electrode mixture layer in the negative electrode, 1.67*d,* Rs, pv, and Rs/(ρv×*d*). In Table 10, the evaluation results of the charging load characteristics are each shown as a relative value when the value of Comparative Example 10 is taken as 100.

**Table 10**

| | Negative electrode | | | | | Charging load characteristics |
|---|---|---|---|---|---|---|
| | Thickness (µm) of negative-electrode mixture layer | 1.67*d* | ρv (Ωcm) | Rs (Ωcm²) | Rs/(ρv×*d*) | |
| Ex. 19 | 91 | 0.01520 | 0.04207 | 0.01251 | 32.68 | 89 |
| Ex. 20 | 91 | 0.01520 | 0.04568 | 0.009881 | 23.77 | 82 |
| Ex. 21 | 91 | 0.01520 | 0.04428 | 0.006156 | 15.28 | 79 |
| Ex. 22 | 91 | 0.01520 | 0.04522 | 0.004967 | 12.07 | 77 |
| Com. Ex. 10 | 91 | 0.01520 | 0.04553 | 0.01884 | 45.47 | 100 |

As shown in Table 10, the non-aqueous electrolyte secondary batteries of Examples 19 to 22 including the negative electrodes in which the thickness of the negative-electrode mixture layer was 50 µm or more and 100 µm or less, the value of Rs/(ρv×*d*) was appropriate, and the relationship: Rs ≤ 1.67*d* + *b* (*b*=0) was satisfied had excellent charging load characteristics compared with the battery of Comparative Example 10 including the negative electrode for which the value of Rs/(ρv×*d*) was inappropriate and the relationship: Rs ≤1.67*d* + *b* (b=0) was not satisfied.

The present invention can be embodied in forms other than those described above without departing from the gist of the present invention. The embodiments disclosed in the present application are examples, and the present invention is not limited to those embodiments. The scope of the present invention should be construed in view of the appended claims, rather than the foregoing description, and all changes that come within the range of equivalency of the claims are intended to be embraced therein.

### Industrial Applicability

A non-aqueous electrolyte secondary battery according to the present invention has excellent charging load characteristics as described above, and can be preferably applied particularly to applications in which rapid charging properties are required, as well as applications in which conventionally-known non-aqueous electrolyte secondary batteries are used. Also, a negative electrode for a non-aqueous electrolyte secondary battery according to the present invention can constitute the non-aqueous electrolyte secondary battery according to the present invention.

### Description of Reference Numerals

- 1: Non-aqueous electrolyte secondary battery
- 2: Electrode assembly
- 3: Positive-electrode external terminal
- 4: Negative-electrode external terminal
- 5: Laminate film exterior body

## Claims

1. A negative electrode for a non-aqueous electrolyte secondary battery comprising a negative-electrode mixture layer containing a negative-electrode active material on one surface or both surfaces of a current collector,
wherein the negative-electrode mixture layer on one surface of the current collector has a thickness of 35 µm or more and less than 50 µm, and
Rs/(ρv×*d*) is 5 to 20, where Rs is an interface resistance (Ωcm²) between the negative-electrode mixture layer and the current collector, pv is a volume resistivity (Ωcm) of the negative-electrode mixture layer, and *d* is the thickness (cm) of the negative-electrode mixture layer.

2. A negative electrode for a non-aqueous electrolyte secondary battery comprising a negative-electrode mixture layer containing a negative-electrode active material on one surface or both surfaces of a current collector,
wherein the negative-electrode mixture layer on one surface of the current collector has a thickness of 50 µm or more and 100 µm or less, and
Rs/(ρv×*d*) is 10 to 38.5, where Rs is an interface resistance (Ωcm²) between the negative-electrode mixture layer and the current collector, pv is a volume resistivity (Ωcm) of the negative-electrode mixture layer, and *d* is the thickness (cm) of the negative-electrode mixture layer.

3. A negative electrode for a non-aqueous electrolyte secondary battery comprising a negative-electrode mixture layer containing a negative-electrode active material on one surface or both surfaces of a current collector,
wherein an interface resistance Rs (Ωcm²) between the negative-electrode mixture layer and the current collector and a thickness *d* (cm) of the negative-electrode mixture layer satisfy a relationship: Rs ≤ 1.67*d* + *b*, where *b* is -0.01 or more and 0 or less.

4. The negative electrode for a non-aqueous electrolyte secondary battery according to claim 3,
wherein the thickness *d* is 100 µm or less.

5. The negative electrode for a non-aqueous electrolyte secondary battery according to claim 3 or 4,
wherein the interface resistance Rs is 0.002 Ωcm² or more.

6. The negative electrode for a non-aqueous electrolyte secondary battery according to any one of claims 3 to 5,
wherein the value *b* is -0.01 or more and -0.003 or less.

7. The negative electrode for a non-aqueous electrolyte secondary battery according to any one of claims 3 to 5,
wherein the value *b* is -0.01 or more and -0.005 or less.

8. A non-aqueous electrolyte secondary battery comprising:
a positive electrode;
a negative electrode;
a separator interposed between the positive electrode and the negative electrode; and
a non-aqueous electrolyte,
wherein the negative electrode is the negative electrode for a non-aqueous electrolyte secondary battery according to any one of claims 1 to 7.

9. A method for manufacturing a negative electrode for a non-aqueous electrolyte secondary battery, comprising, when forming a negative-electrode mixture layer containing a negative-electrode active material on one surface or both surfaces of a current collector:
adjusting a thickness of the negative-electrode mixture layer on one surface of the current collector to 35 µm or more and less than 50 µm; and
adjusting Rs/(ρv×*d*) to 5 to 20, where Rs is an interface resistance (Ωcm²) between the negative-electrode mixture layer and the current collector, pv is a volume resistivity (Ωcm) of the negative-electrode mixture layer, and *d* is the thickness (cm) of the negative-electrode mixture layer.

10. A method for manufacturing a negative electrode for a non-aqueous electrolyte secondary battery, comprising, when forming a negative-electrode mixture layer containing a negative-electrode active material on one surface or both surfaces of a current collector:
adjusting a thickness of the negative-electrode mixture layer on one surface of the current collector to 50 µm or more and 100 µm or less; and
adjusting Rs/(ρv×*d*) to 10 to 38.5, where Rs is an interface resistance (Ωcm²) between the negative-electrode mixture layer and the current collector, pv is a volume resistivity (Ωcm) of the negative-electrode mixture layer, and *d* is the thickness (cm) of the negative-electrode mixture layer.

11. A method for manufacturing a negative electrode for a non-aqueous electrolyte secondary battery, comprising, when forming a negative-electrode mixture layer containing a negative-electrode active material on one surface or both surfaces of a current collector:
adjusting an interface resistance Rs (Ωcm²) between the negative-electrode mixture layer and the current collector and a thickness *d* (cm) of the negative-electrode mixture layer so as to satisfy a relationship: Rs ≤ 1.67*d* + *b*, where *b* is -0.01 or more and 0 or less.

12. A method for manufacturing a non-aqueous electrolyte secondary battery including a positive electrode, a negative electrode, a separator interposed between the positive electrode and the negative electrode, and a non-aqueous electrolyte,
wherein a negative electrode for a non-aqueous electrolyte secondary battery manufactured using the method for manufacturing a negative electrode for a non-aqueous electrolyte secondary battery according to any one of claims 9 to 11 is used as the negative electrode.

13. A method for inspecting a negative electrode for a non-aqueous electrolyte secondary battery including a negative-electrode mixture layer containing a negative-electrode active material on one surface or both surfaces of a current collector, the method comprising:
a step of measuring an interface resistance Rs (Ωcm²) between the negative-electrode mixture layer and the current collector, a volume resistivity pv (Ωcm) of the negative-electrode mixture layer, and a thickness *d* (cm) of the negative-electrode mixture layer, and calculating a value of Rs/(ρv×*d*) with respect to the negative electrode for a non-aqueous electrolyte secondary battery; and
a step of selecting a non-aqueous electrolyte secondary battery to which the negative electrode for a non-aqueous electrolyte secondary battery is to be applied, based on the value of Rs/(ρv×*d*).

14. A method for inspecting a negative electrode for a non-aqueous electrolyte secondary battery including a negative-electrode mixture layer containing a negative-electrode active material on one surface or both surfaces of a current collector, the method comprising:
a step of measuring an interface resistance Rs (Ωcm²) between the negative-electrode mixture layer and the current collector and a thickness *d* (cm) of the negative-electrode mixture layer, with respect to the negative electrode for a non-aqueous electrolyte secondary battery; and
a step of selecting a non-aqueous electrolyte secondary battery to which the negative electrode for a non-aqueous electrolyte secondary battery is to be applied, based on a relationship between the interface resistance Rs and the thickness *d.*
